Europäisches Patentamt

European Patent Office

Office européen des brevets

(11) Veröffentlichungsnummer: **0 617 086 A2**

## (12) EUROPÄISCHE PATENTANMELDUNG

(21) Anmeldenummer: **94104131.1**

(22) Anmeldetag: **17.03.94**

(51) Int. Cl.5: **C08L 63/00**, C08J 3/03, C08G 59/04

(30) Priorität: **25.03.93 DE 4309639**

(43) Veröffentlichungstag der Anmeldung:
**28.09.94 Patentblatt 94/39**

(84) Benannte Vertragsstaaten:
**AT BE CH DE DK ES FR GB GR IE IT LI NL PT SE**

(71) Anmelder: **HOECHST AKTIENGESELLSCHAFT**

**D-65926 Frankfurt (DE)**

(72) Erfinder: **Pfeil, Armin, Dr.**
**Hessenring 26**
**D-65205 Wiesbaden (DE)**
Erfinder: **Geisler, Jörg-Peter, Dr.**
**Selztalstrasse 137**
**D-55218 Ingelheim (DE)**
Erfinder: **Oberressl, Paul**
**Bertramstrasse 4**
**D-65189 Wiesbaden (DE)**
Erfinder: **Dreischhoff, Dieter**
**Pestalozzistrasse 32**
**D-65203 Wiesbaden (DE)**

(54) **Wässrige Epoxidharz-Dispersionen.**

(57) Wäßrige Epoxidharz-Dispersionen enthaltend
(A) ein Epoxidharz, das ein Kondensationsprodukt aus einer oder mehrerer Epoxidverbindung(en), eines aromatischen Polyols und gegebenenfalls einer modifizierenden Verbindung mit mindestens zwei epoxid-reaktiven Gruppen darstellt,
(B) ein Dispergiermittel in Form eines Kondensationsproduktes aus einem aliphatischen Polyol und einer Epoxidverbindung wobei das Äquivalentverhältnis der OH Gruppen zu den Epoxidgruppen 1 : 0,8 bis 1 : 3,5 beträgt,
(C) ein Härtungsmittel für das Epoxidharz, und
(D) gegebenenfalls übliche Additive,
als Ein- oder Zwei-Komponentensystem, ihre Herstellung und ihre Verwendung als Beschichtungsmittel.

EP 0 617 086 A2

Beschichtungsmittel für die Innenbeschichtung von Behältern, die der Aufbewahrung von Nahrungsmitteln und Getränken dienen sollen, haben vor allem zwei Aufgaben: Sie sollen zum einen das Behältermaterial selbst vor aggressiven Bestandteilen des Füllgutes, z.B. Säuren natürlichen Ursprungs, schützen, um eine möglichst lange Lebensdauer des Behälters zu gewährleisten, andererseits sollen sie eine Kontamination des Füllgutes durch das Behältermaterial, z.B. infolge von chemischen Reaktionen, verhindern. Entsprechende Beschichtungen stellen also im Idealfall eine chemisch inerte, undurchlässige Barriere zwischen Füllgut und Behälter dar. Um die genannten Aufgaben zuverlässig zu erfüllen, müssen die Beschichtungen eine Reihe von Forderungen erfüllen. Sie müssen z.B. eine gute Haftung auf Stahl, Weißblech, Aluminium und anderen gängigen Behältermaterialien aufweisen, gegenüber verdünnten Säuren (z.B. Essigsäure, Milchsäure, Kohlensäure) und Schwefel auch bei höheren Temperaturen beständig sein, pasteurisations- und sterilisationsfest sein und auch ein hohes Maß an Elastizität aufweisen, um Verformungen des Behältermaterials, sei es bei der Herstellung der Behälter oder z.B. durch Eindrücken des befüllten Behälters, ohne Beschädigungen zu überstehen. Außerdem dürfen die Beschichtungsmittel keine Bestandteile enthalten, die in das Füllgut wandern und dieses in irgendeiner Hinsicht verändern. Demgemäß unterliegen entsprechende Beschichtungsmittel einer restriktiven gesetzlichen Reglementierung, z.B. in der Bundesrepublik Deutschland durch Regelungen des Bundesgesundheitsamtes oder in den USA durch die 21 CFR § 175.300-Regelung. Um einen im Idealfall inerten Beschichtungsfilm zu erhalten, werden im allgemeinen als Beschichtungsmittel Einkomponentensysteme verwendet, deren reaktive Gruppen bei höheren Temperaturen innerhalb kürzester Zeit, z.B. bei 200°C in acht bis zehn Minuten, vollständig unter Ausbildung eines hochgradig vernetzten Filmes reagieren.

Als geeignete Bindemittel haben sich dabei in der Vergangenheit höhermolekulare Epoxidharze erwiesen. Sie härten in Kombination mit geeigneten Härtern, z.B. Phenolharzen, Aminharzen, Polycarbonsäuren oder deren Anhydriden unter den genannten Bedingungen aus, ergeben chemikalienbeständige, flexible Filme und sind im übrigen durch die erwähnten Gesetze für die Verwendung in Innenbeschichtungen in Nahrungsmittelbehältern zugelassen. Solche Beschichtungsmittelkombinationen enthalten aber im allgemeinen einen größeren Anteil organischer Lösungsmittel. Im Zuge der immer strenger werdenden gesetzlichen Anforderungen hinsichtlich einer Reduktion bzw. gänzlichen Vermeidung von Lösemittelemissionen - hingewiesen sei hier exemplarisch auf die VOC-Regelungen der USA - wächst der Bedarf an lösemittelarmen oder -freien, wäßrigen Beschichtungsmitteln für die Doseninnenbeschichtung. Tatsächlich gibt es bereits eine Reihe von Vorschlägen in dieser Richtung zur Formulierung von wäßrigen Bindemitteln auf Epoxidharzbasis für die Innenbeschichtung von Nahrungsmittelbehältern:

So werden in den Schriften US 3,862,914 und GB 1,174,344 carboxylfunktionelle Umsetzungsprodukte von Epoxidharzen mit Säureanhydriden beschrieben, die sich nach (Teil-)Neutralisation mit Aminen in die wäßrige Phase überführen lassen. Diese Produkte, die mit Phenol- und/oder Aminoharzen vernetzt werden, hydrolysieren leicht und sind daher nicht ausreichend lagerstabil. Um diese Hydrolyseempfindlichkeit zu umgehen, kann man auch Epoxidharze mit Phenolcarbonsäuren umsetzen, die nach Esterhydrolyse ebenfalls teilneutralisiert und in die wäßrige Phase übergeführt werden können. Diese Bindemittel sind aber schwierig herzustellen, da die zur Hydrolyse benötigten starken Basen sorgfältig entfernt werden müssen.

Weitere Möglichkeiten zur Herstellung von wäßrigen Bindemitteln für die Doseninnenbeschichtung eröffnet die Modifizierung von Epoxidharzen mit Acrylaten, die entweder über die Umsetzung von Epoxidgruppen mit (Meth)Acrylsäure(derivaten), also terminal, oder durch laterale Pfropfung auf das Epoxidharzgerüst erfolgen kann. In allen Fällen werden ungesättigte Säuremonomere wie z.B. Acrylsäure, mitverwendet, die anschließend neutralisiert werden, um die Löslichkeit oder Dispergierbarkeit in Wasser zu vermitteln. Solche Systeme enthalten im allgemeinen noch bis zu 25 % organische Lösemittel und zeigen eine schlechte Wasserbeständigkeit.

So wird in der DE-PS 34 46 178 ein System beschrieben, welches 40-60 % eines hochmolekularen Epoxidharzes, 30-40 % Phenolharz und 25-35 % Acrylmonomere enthält, wobei ein Monomeres eine Carbonsäure ist. Auch hier ist Neutralisation mit Aminen und ein höherer Lösungsmittelanteil notwendig. Die Härtung erfolgt nach der Applikation in Gegenwart radikalischer Initiatoren, wobei Additions- und Polymerisationsreaktionen gleichzeitig ablaufen. Dieses System zeigt eine gute Lagerstabilität und erfüllt einige der o.g. Kriterien.

Auf dem Markt befindet sich ein durch Amine neutralisiertes System, welches aus einem mit einer Polyacrylsäure modifizierten hochmolekularerem Epoxidharz besteht, das selbstvernetzend oder in Kombination mit wasserverdünnbaren Phenolharzen eingesetzt wird (US 4,458,040). Dieses Bindemittel zeigt aber ebenfalls keine ausreichende Sterilisationsfestigkeit und ist daher in Dosen für kohlensäurefreie Getränke und Lebensmittel, welche unter Wärme oder gar Hitze abgefüllt werden, nicht geeignet. Zudem weist es weitere erhebliche Nachteile auf, wie zum Beispiel den niedrigen Feststoffgehalt von ca. 24 %, den hohen Anteil an organischen Lösemitteln (ca. 19%) und den Gehalt an flüchtigem Amin (ca. 2 %).

2

Im allgemeinen werden die zuvor beschriebenen Systeme, die den Stand der Technik repräsentieren, nur selten für die Doseninnenbeschichtung angewendet, da der Einsatz flüchtiger Amine sowohl von der Toxikologie als auch vom Geruch her problematisch ist, ionisch stabilisierte Bindemittel im allgemeinen eine ungenügende Lagerstabilität aufweisen und letztere zudem durch Viskositätsanstieg infolge langsamer Umsetzungen der Koreaktanden (Phenolharze, Melaminharze) weiter beschränkt wird.

Einen sinnvolleren Zugang zu wäßrigen Beschichtungsmitteln stellt der Einsatz nichtionischer Emulgatoren bzw. die Einführung hydrophiler, nichtionischer Gruppen in das Epoxidharz dar. Auf diese Weise (siehe z.B. EP 272 595) lassen sich lagerstabile, aminfreie und lösemittelarme wäßrige Dispersionen herstellen. Mit diesen Dispersionen und entsprechenden Koreaktanden wie Phenolharzen und/oder Melaminharzen ließen sich bisher allerdings keine Beschichtungsmittel für Dosen herstellen, die in ihren Eigenschaften dem von konventionellen, lösemittelhaltigen Systemen bekannten Qualitätsstandard nahekamen. Z.B. ließen sich keine vergilbungsfreien Weißlacke formulieren.

Überraschenderweise wurde nun aber gefunden, daß wäßrige, lösemittelarme, nichtionisch stabilisierte Dispersionen wäßriger Epoxidharze, wie sie in der EP-PS 272 595 beschrieben sind, in Kombination mit speziellen polyfunktionellen Carbonsäuren und/oder deren Derivaten Beschichtungsmittelkombinationen ergeben, welche in der Hitze zu qualitativ hochwertigen Beschichtungen, die alle zuvor genannten Kriterien erfüllen, aushärten und demgemäß in hervorragender Weise für die Innenbeschichtung von Nahrungsmittelbehältern wie beispielsweise Getränkedosen geeignet sind.

Gegenstand der Erfindung sind demgemäß heißhärtbare wäßrige, lösemittelarme Epoxidharz-Dispersionen, die folgende Komponenten enthalten

(A) ein Epoxidharz, das ein Kondensationsprodukt aus

(A1) 50 bis 95, vorzugsweise 55 bis 85 Gew.-% einer oder mehrerer Epoxidverbindung(en) mit mindestens zwei Epoxidgruppen pro Molekül und einem Epoxidäquivalentgewicht von 100 bis 2000,

(A2) 5 bis 50, vorzugsweise 15 bis 45 Gew.-% eines aromatischen Polyols und

(A3) 0,5 bis 25, vorzugsweise 0,5 bis 10 Gew.-% modifizierender Verbindungen mit mindestens zwei epoxid-reaktiven Gruppen darstellt,

(B) ein Dispergiermittel in Form eines Kondensationsproduktes aus einem aliphatischen Polyol mit einem mittleren Molekulargewicht (Mw) von 200 bis 20000 und einer Epoxidverbindung mit mindestens zwei Epoxidgruppen pro Molekül und einem Epoxidäquivalentgewicht von 100 bis 2000, wobei das Äquivalentverhältnis der OH Gruppen zu den Epoxidgruppen 1 : 0,8 bis 1 : 3,5 beträgt und das Epoxidäquivalentgewicht dieses Kondensationsproduktes zwischen 5 000 und 400 000 g/mol liegt,

(C) ein Härtungsmittel für das Epoxidharz (A) und

(D) gegebenenfalls übliche Additive,

wobei die Komponenten (A), (B) und (C) in solchen Gewichtsmengen eingesetzt werden, daß das Äquivalentverhältnis der zur Umsetzung befähigten Epoxidgruppen zu den Carboxylgruppen mindestens 1: 0,5 beträgt.

Die erfindungsgemäßen Epoxidharz-Dispersionen können fertig gemischt (als Ein-Komponenten-System) verwendet werden, sie können auch als Zwei-Komponentensystem ausgebildet sein, wobei die Bestandteile (A), (B) und (D) als wäßrige Dispersion die erste Komponente bilden, und der Härter (C) in einer geeigneten Zubereitung die zweite Komponente bildet.

Die Erfindung betrifft weiterhin ein Verfahren zur Herstellung dieses heißhärtenden Bindemittels, dadurch gekennzeichnet, daß zunächst das Epoxidharz (A) durch Kondensation der Komponenten (A1), (A2) und gegebenenfalls (A3) bei erhöhten Temperaturen in Gegenwart eines Kondensationskatalysators hergestellt wird, wobei, falls zwei oder mehrere Epoxidverbindungen (A1) verwendet werden, die Kondensationsreaktion vorzugsweise in zwei Stufen durchgeführt wird, anschließend das Dispergiermittel (B) und gegebenenfalls weitere, organische Lösungsmittel zugegeben werden und danach zu der so erhaltenen Mischung bei 30 bis 100 °C entsprechende Mengen Wasser, schließlich gegebenenfalls die Härtungsmittel gemäß (C), sowie gegebenenfalls die Substanzen entsprechend (D), jeweils unter kräftigem Rühren und gutem Homogenisieren zugegeben werden.

Gegenstand der Erfindung ist ferner die Verwendung der erfindungsgemäßen Bindemittel zur Herstellung von Beschichtungen, insbesondere von Korrosionsschutz-Einbrenngrundierungen, von Füllern und Decklacken vorzugsweise auf metallischen Untergründen, ferner zur Herstellung von Innen- und Außenlakken für Kronkorken und Schraubverschlüsse sowie für coil-coating-Lacke, welche nach der Vernetzung noch starker Verformung unterliegen, insbesondere aber die Verwendung für Innenbeschichtungen von Getränkedosen und Konservendosen.

Das Epoxidharz entsprechend (A) dererfindungsgemäßen Dispersionen besitzt vorzugsweise ein Epoxidäquivalentgewicht von 350 bis 4000, insbesondere von 400 bis 2000. Die mittlere Teilchengröße des dispergierten Harzes ist in der Regel nicht höher als 1,0 $\mu$m und beträgt vorzugsweise 0,2 bis 0,8 $\mu$m. Der

Anteil dieses Harzes in der Gesamtdispersion beträgt im allgemeinen etwa 20 bis 75 Gew.-%, vorzugsweise etwa 25 bis 65 Gew.-%.

Bei den 1,2-Epoxidverbindungen entsprechend (A1) und (B) handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 100 und 2000, insbesondere zwischen 100 und 350.

Als mehrwertige Phenole sind beispielsweise zu nennen: Resorcin, Hydrochinon, 2,2-Bis-(4'-hydroxyphenyl)-propan (Bisphenol A), Isomerengemische des Dihydroxydiphenylmethans(Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4'-hydroxyphenyl)-1,1-ethan, 2,2-Bis[4'-(2''-Hydroxypropoxy)phenyl]-propan, Bis-(4'-hydroxyphenyl)-1,1-isobutan, Bis-(4'-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl-)ether, Bis-(4-hydroxyphenyl-)sulfon u.a. sowie die Halogenierungs- und Hydrierungsprodukte der vorstehend genannten Verbindungen. Bisphenol A ist hierbei besonders bevorzugt.

Als Beispiele für mehrwertige Alkohole seien Ethylenglykol, Diethylenglykol, Triethylenglykol, Polyethylenglykole (n = 1 bis 35), 1,2-Propylenglykol, Polypropylenglykole (n = 1 bis 15), 1,3-Propylenglykol, 1,4-Butandiol, 1,5-Pentandiol, 1,6-Hexandiol, 1,2,6-Hexantriol, Glycerin, Neopentylglykol, 1,4-Dimethylolcyclohexan, Trimethylolethan, Trimethylolpropan, sowie ethoxylierte und propoxylierte Bisphenole wie z.B. propoxyliertes Bisphenol A, genannt. Polypropylenglykole (n = 8 - 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäureund dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A. M. Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Als aromatische Polyole entsprechend (A2) kommen vorzugsweise die aromatischen OH-gruppenhaltigen Verbindungen in Frage, die vorstehend bei den Komponenten (A1) beschrieben wurden, also mehrwertige, vorzugsweise zweiwertige Phenole, deren Halogenierungsprodukte und/oder Novolake. Besonders bevorzugt ist auch hier Bisphenol A.

Bei den modifizierenden Verbindungen gemäß (A3) handelt es sich um Verbindungen mit mindestens zwei funktionellen Gruppen, welche zur Reaktion mit den Epoxidgruppen der Komponente (A1) befähigt sind, und welche sich nicht unter den aromatischen Polyolen gemäß (A2) einordnen lassen. Ihr Einsatz erfolgt, um durch gezielte Modifikation wünschenswerte Eigenschaften des Basisharzes (A) einzustellen. Hierbei kann es sich um Polyamine (z.B. Ethylendiamin, Diethylentriamin, Triethylentetramin, Tetraethylenpentamin usw.), Polyoxyalkylenoxide mit endständigen Aminogruppen (z.B. die Jeffamine® der Firma TEXACO), Polycarbonsäuren (z.B. Maleinsäure, Fumarsäure, Phthalsäure, Bernsteinsäure, dimere und trimere Fettsäuren usw. und deren Anhydride, soweit möglich, siehe auch die Säuren bei der Beschreibung der carboxylgruppenhaltigen Härtungsmittel gemäß (C)) sowie aliphatische Polyole (z.B. Ethylenglykol, Propylenglykol, Butylenglykol, Polyethylenglykol, Polypropylenglykol, Trimethylolpropan und -ethan, Neopentylglykol, Glycerin usw.). Besonders bevorzugt sind dimere Fettsäuren mit einem Gehalt von 20 bis 50 Kohlenstoffatomen.

Bei den aliphatischen Polyolen der Komponente (B) handelt es sich vorzugsweise um Polyetherpolyole (Polyalkylenglykole) mit mittleren Molekulargewichten (Mw; Gelpermeationschromatographie; Polystyrolstandard) von bevorzugt zwischen 600 und 12000, insbesondere 2000 bis 8000 und OH-Zahlen zweckmäßigerweise von 10 bis 600, bevorzugt 15 bis 120. Diese Polyetherpolyole besitzen vorzugsweise nur endständige, primäre OH-Gruppen. Beispielsweise seien hier Blockcopolymere aus Ethylenoxid und Propylenoxid sowie Polyethylen-, Polypropylen-, Polybutylenglykole genannt, wobei auch Gemische der jeweiligen

4

Polyalkylenglykole eingesetzt werden können. Vorzugsweise werden Polyethylenglykole verwendet.

Vorzugsweise wird das Dispergiermittel (B) durch Kondensation der genannten Polyetherpolyole mit den Polyglycidylethern gemäß (A1) in Gegenwart geeigneter Katalysatoren bei 50 bis 200 °C, vorzugsweise bei 90 bis 170 °C, hergestellt, wobei das Äquivalentverhältnis der OH-Gruppen zu den Epoxidgruppen 1 : 0,8 bis 1 : 1,5, vorzugsweise 1 : 0,95 bis 1 : 1,25 und das Epoxidäquivalentgewicht des Kondensationsproduktes mindestens 5000 g/mol, vorzugsweise 100000 g/mol bis 400000 g/mol beträgt.

Als Katalysatoren für die Darstellung des Dispergiermittels (B) eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumethylat und Kaliumdodecylat sowie die Alkalisalze von Carbonsäuren, wie zum Beispiel Natrium- und Lithiumstearat. Ebenfalls geeignet sind starke anorganische und organische Protonsäuren, zum Beispiel Phosphorsäure, Schwefelsäure, Tetrafluorborsäure und Benzolsulfonsäure. Ferner können als Katalysatoren Lewis-Säuren verwendet werden. Als Beispiele seien Zinn(IV)chlorid, Titan(IV)chlorid, Titan(IV)isopropylat, Triethyloxoniumtetrafluoroborat sowie Bortrifluorid und seine Komplexe, zum Beispiel mit Phosphorsäure, Essigsäure (1 : 1 und 1 : 2), Methanol, Diethylether, Tetrahydrofuran, Phenol, Ethylenglykolmonoethylether, Polyethylenglykol (MG 200), Dimethylsulfoxyd, Di-n-Butylether, Di-n-Hexylether, Bernsteinsäure und aliphatische, cycloaliphatische, araliphatische Amine sowie Stickstoff-Heterocyclen genannt.

Bevorzugt werden als Katalysatoren $BF_3$-Diethylether, $BF_3$-Essigsäure und wäßrige Tetrafluorborsäure eingesetzt. Die Menge an Katalysator beträgt im allgemeinen 0,1 bis 5, vorzugsweise 0,1 bis 1 Gew.-%, bezogen auf das Reaktionsgemisch. Zur besseren Dosierung kann der Katalysator in einem Lösungsmittel wie Diethylether, einem Glykol- oder cyclischen Ether, Ketonen und dergleichen verdünnt werden.

Zur Herstellung des Dispergiermittels erwärmt man die umzusetzenden Gemische aus Hydroxylgruppen und Epoxidgruppen enthaltenden Verbindungen bis zu der Temperatur, bei der die Kondensation mit ausreichender Geschwindigkeit d. h. in 30 min bis 5 Stunden, abläuft. Die Umsetzung verfolgt man zweckmäßig über die Zunahme des Epoxidäquivalents, das eine Verminderung des Epoxidgruppengehaltes anzeigt. Die Reaktion kann durch Kühlung unter die Reaktionstemperatur abgebrochen werden.

Das so gewonnene Kondensationsprodukt kann als solches (100%ig) als Dispergiermittel (B) zur Herstellung der erfindungsgemäßen Dispersionen verwendet werden. Vorzugsweise wird jedoch aus Gründen der besseren Handhabbarkeit eine Mischung von 20 bis 99, vorzugsweise 40 bis 60 Gew.-% des Kondensationsproduktes und einem wäßrigen Medium, bestehend aus (bezogen auf die gesamte Mischung) bis zu 50, vorzugsweise bis zu 30 Gew.-%, eines organischen Lösungsmittels und bis zu 80, vorzugsweise 15 bis 60 Gew.-%, Wasser hergestellt und diese Mischung als Dispergiermittel (B) verwendet. Als organische Lösungsmittel kommen insbesondere Glykole, Mono- und Diether- und -ester von Glykolen mit Alkoholen und Säuren, aliphatische Alkohole mit gegebenenfallsverzweigten Alkylresten von 1 bis 12 Kohlenstoffatomen, cycloaliphatische und araliphatische Alkohole sowie Ester und Ketone in Betracht, wobei diese Lösungsmittel einzeln oder im Gemisch eingesetzt werden können. Als Beispiele seien genannt: Ethylenglykol, Ethylenglykolmonomethylether, Ethylenglykoldimethylether, Butylglykol, Methoxypropanol, Ethoxypropanol, Ethanol, 1- und 2-Propanol, Butanol, Cyclohexanol, Benzylalkohol, Essigsäureethylester, Aceton sowie Methylisobutylketon. Bevorzugt werden Butylglykol, Methoxypropanol, Ethoxypropanol, 2-Propanol und/oder Benzylalkohol eingesetzt.

Die erfindungsgemäßen Epoxidharz-Dispersionen enthalten im allgemeinen 3 bis 20, vorzugsweise 4 bis 15 Gew.-% des Dispergiermittels (B).

Der Dispersion aus Epoxidharz und Dispergiermittel können auch weitere Lösungsmittel zugesetzt werden. Als organische Lösungsmittel kommen hier ebenfalls die oben genannten Lösungsmittel entsprechend in Frage, ferner können auch Aromaten wie Toluol oder Xylol verwendet werden. Die Lösungsmittel können einzeln oder im Gemisch eingesetzt werden. Bevorzugte Lösungsmittel sind wiederum Butylglykol, Methoxypropanol, Methoxybutanol, Isopropoxy-propanol, Ethoxypropanol, 2-Propanol und/oder Benzylalkohol.

Der Gesamtgehalt an organischen Lösungsmitteln in der fertigen Dispersion, beträgt bis zu 10 Gew.-%, bezogen auf die fertige Dispersion, vorzugsweise weniger als 6 Gew.-%.

Als Härtungsmittel (C) eignen sich alle üblicherweise bei Epoxidharzen eingesetzten Mittel, wie basische Härter wie Lewis-Basen, anorganische Basen, primäre und sekundäre Amine sowie Amide, saure Härter wie Lewis-Säuren, Phenole, organische Säuren und deren Anhydride, Phenolharze und Aminoplaste wie Melamin- und Harnstoff-Harze. Bevorzugt sind Carboxylgruppenhaltige oder -freisetzende Härtungsmittel für das Epoxidharz (A), bestehend aus einer oder mehrerer Carboxylgruppen-haltigen Verbindung(en), wobei mindestens eine dieser Verbindungen eine Funktionalität von mindestens drei Carboxylgruppen pro Molekül aufweist, im Besonderen wasserlösliche oder wassermischbare Polycarbonsäuren. Solche Härtungsmittel werden im allgemeinen im Äquivalentverhältnis Epoxidäquivalent zu Carboxyläquivalent von mindestens 1:0,5 eingesetzt. Beispiele für solche Polycarbonsäuren sind Cyclopentantetracarbonsäure, Cyclobutantetracarbonsäure, 1,2,3,4-Butantetracarbonsäure, Weinsäure, Malonsäure, Äpfelsäure, Zitronensäure und Aconitsäure.

Ferner sind geeignet Anhydride oder saure Ester dieser Säuren mit mehrwertigen Alkoholen mit 2 bis 12, vorzugsweise 2 bis 6 C-Atomen, wie beispielsweise Neopentylglykol, Glycerin, Trimethylol-ethan oder -propan, den Alkandiolen und deren Oligomeren, die gegebenenfalls eine oder mehrere Etherbrücken enthalten, wie Ethylenglykol, Propan- und Butandiole, wobei die Ester stets mindestens zwei freie Carboxylgruppen aufweisen. Es ist auch möglich, saure Ester mit zwei oder mehr Carboxylgruppen von Carbonsäuren, wie beispielsweise Pyromellithsäure, Trimellithsäure, Phthalsäure, Endomethylentetra- oder -hexahydrophthalsäure, Maleinsäure, Fumarsäure bzw. deren Anhydriden, sofern diese existieren, mit mehrwertigen Alkoholen, z.B. den vorstehend genannten, als Polycarbonsäurehärterzu verwenden, sofern diese sauren Ester eine ausreichende Wasserlöslichkeit bzw. Wasserverdünnbarkeit besitzen. Ebenfalls lassen sich geeignete saure hydrophile Polyester beispielsweise der mehrwertigen Säuren mit den genannten mehrwertigen Alkoholen einsetzen. Auch Reaktionsprodukte dieser Säureanhydride oder Säuren mit polyaminofunktionellen Verbindungen, wie z.B. Polyamine wie Diethylendiamin, Diethylentriamin, Triethylentetramin und höhere Homologe, oder mit den verschiedensten Polyoxyalkylendiaminen (Jeffamine® der Firma Texaco), sowie an den Hydroxylgruppen modifizierte Hydroxycarbonsäuren, wie z.B. alkoxylierte Zitronensäure oder Weinsäure etc., sowie sämtliche unter Härtungsbedingungen zur Umesterung befähigten Säuren, wie z.B. die Methylester von Trimellithsäure oder Äpfelsäure lassen sich als Härtungsmittel einsetzen. Geeignet sind ebenfalls saure Salze der genannten Säuren, bevorzugt solche mit flüchtigen Basen, sowie weitere Derivate, welche unter Härtungsbedingungen reaktive Carboxylgruppen freisetzen. Bevorzugt werden als saure Härtungsmittel Polycarbonsäuren eingesetzt.

Die Härtung der Epoxidharzdispersionen mit den sauren Härtungsmitteln erfolgt zweckmäßigerweise bei höheren Temperaturen, z.B. bei 60 bis 250 °C, vorzugsweise bei 80 bis 200 °C, in einer bis 150 Minuten. Zur Erzielung einer vollständigeren Durchhärtung bzw. zur Senkung der für eine ausreichende Durchhärtung erforderlichen Temperaturen können den genannten sauren Härtern noch geringe Mengen von Verbindungen beigegeben werden, die die Umsetzung Carboxylgruppe/Epoxidgruppekatalysieren. Geeignete Verbindungen sind beispielsweise starke Protonsäuren wie Phosphorsäure oder para-Toluolsulfonsäure, tertiäre Amine wie Triethylamin, N,N-Dimethylbenzylamin, Stickstoffheterocyclen wie Imidazol, Pyridin und deren Derivate, Trialkyl- und Triarylphosphine sowie entsprechende Phosphoniumverbindungen und Metallsalze bzw. -chelate wie zum Beispiel Zinn(II)octoat.

Zusätzlich zu den vorstehend beschriebenen Härtern können zur Härtung auch Amin- und/oder Phenolharze genommen werden, die in Mengen von 5 bis 50 Gew.-%, vorzugsweise 10 bis 35 Gew.-%, bezogen auf den Gesamtfeststoffgehalt der fertigen Dispersion, eingesetzt werden. Gegebenenfalls wird die Dispersion dabei noch durch zusätzliches Wasser auf einen Gesamtfeststoffgehalt von 10 bis 80 Gew.-% eingestellt. Beispiele für derartige Aminharze sind Aminaldehydharze, d.h. Kondensationsprodukte von Aldehyden mit Melamin (Melaminharze), Harnstoff (Harnstoffharze), Acetoguanamin (Acetoguanaminharze) oder ähnlichen Verbindungen bzw. entsprechende Präkondensate. Bevorzugte Aldehydkondensationsprodukte des Melamins sind vor allem die Melamin-MethoxyAlkylether, wobei die Alkylreste Methyl, n- oder i-Butylgruppen, bevorzugt Methylgruppen sind, wie Hexamethoxymethylmelamin, Ethoxymethoxymethylmelamin, Monomethylolpentamethoxymethylmelamin, Dimethylol-tetramethoxymethylenmelamin, Trimethylol-trimethoxymethylenmelamin und dergleichen mit weitgehend monomerer Struktur sowie entsprechende oligomere oder polymere Produkte.

Als Phenolharzhärter seien Resole, Formaldehyd-Phenolcarbonsäureharzeund Phenolharzvorprodukte genannt, wobei die handelsüblichen veretherten, mit Wasser verdünnbaren Phenolharzresole bevorzugt sind.

Gegebenenfalls kann man den Phenol- und/oder Aminharz enthaltenden Dispersionen auch saure Katalysatoren, wie para-Toluolsulfonsäure, Cyclohexansulfaminsäure, saures Butylphosphat und Phosphorsäure - gegebenenfalls auch als (Amin]salze - zusetzen, um die Geschwindigkeit der Härtungsreaktion zu beschleunigen, so daß man Filme oder Überzüge erzeugt, die bei niedriger Temperatur oder in kürzerer Zeit aushärten. Die Menge dieser sauren Katalysatoren beträgt z.B. 2 Gew.-%, bezogen auf den Gesamtfeststoffgehalt.

In der Ausführungsform als Zweikomponentensystem wird der Härter (C) in einer geeigneten Zubereitung der wäßrigen Dispersion, die die Komponenten (A), (B) und gegebenenfalls (D) enthält, erst unmittelbar vor der Verarbeitung zugefügt.

Die erfindungsgemäßen Dispersionen können neben dem Bindemittel (A) + (B) + (C) auch noch andere härtbare Bindemittel enthalten. Solche zusätzlichen Bindemittel sind beispielsweise in wäßrigen Medien dispergierbare Harze auf Basis von Hydroxyalkylacrylestern, Hydroxyalkyden, Polyestern, Epoxidharzen und dergleichen. Der Anteil dieser Zusätze kann so bemessen werden, daß deren Anteil am Gesamtfeststoffgehalt etwa 10 bis 80, vorzugsweise 20 bis 40 Gew.-%, beträgt. Durch den Zusatz solcher Harze können die Eigenschaften der aus den Dispersionen hergestellten Produkte in mannigfaltiger Weise beeinflußt werden. So ist es z.B. möglich, durch den Zusatz von Acrylatharzen die Vergilbungsbeständigkeit zu erhöhen, während bei Anwesenheit von Alkydharzen die Elastizität der daraus hergestellten Beschichtungen deutlich verbessert wird.

Der Gesamtfeststoffgehalt der erfindungsgemäßen Epoxidharzdispersionen kann zwischen 10 und 80 Gew.-% betragen, zweckmäßigerweise liegt er zwischen 35 und 70 Gew.-% und vorzugsweise zwischen 45 und 65 Gew.-%.

Die Viskosität dieser Dispersionen beträgt im allgemeinen zwischen 200 und 30000 mPa.s, vorzugsweise zwischen 750 und 7000 mPa.s.

Als übliche Zusatzstoffe im Sinne von (D), die eventuell in den erfindungsgemäßen Dispersionen vorhanden sein können, seien hier beispielsweise die üblichen Lackadditive wie Pigmente, Pigmentpasten, Antioxidantien, Verlaufs- bzw. Verdickungsmittel, Entschäumer/Entlüfter und/oder Netzmittel, Reaktivverdünner, Füllstoffe, Katalysatoren, Konservierungsmittel, Schutzkolloide udgl. genannt. Diese Additive, wie auch die Härter, können der Dispersion gegebenenfalls erst unmittelbar vor der Verarbeitung zugegeben werden.

Zur Herstellung dererfindungsgemäßen Epoxidharzdispersionen wird zunächst das Epoxidharz (A) durch Kondensation der Komponenten (A1) und (A2), gegebenenfalls mit (A3), bei erhöhten Temperaturen, im allgemeinen bei 100 bis 220 °C, vorzugsweise bei 150 bis 180 °C, in Gegenwart eines die Kondensation beschleunigenden Katalysators hergestellt.

Werden zwei oder mehrere Epoxidverbindungen (A1) eingesetzt, so wird die Kondensationsreaktion vorzugsweise in zwei Stufen durchgeführt, wobei in einer ersten Reaktion eine oder mehrere Komponenten (A1) mit den Komponenten gemäß (A2) und gegebenenfalls (A3) in einem solchen Mengenverhältnis umgesetzt werden, daß dieses erste Kondensationsprodukt ein Epoxid-Äquivalentgewicht von größer 5000 g/mol, vorzugsweise größer 20000 g/mol, besitzt und noch freie phenolische Gruppen aufweist, und in einer weiteren Kondensationsreaktion dieses erste Kondensationsprodukt mit weiteren Epoxidverbindungen gemäß (A1) umgesetzt wird, so daß schließlich das gewünschte Epoxidharz (A) erhalten wird.

Geeignete Kondensationskatalysatoren sind beispielsweise Phosphine, wie Triphenylphosphin, Phosphoniumsalze, wie z.B. Benzyltrimethylphosphoniumchlorid, tertiäre Amine, wie N,N-Dimethylbenzylamin, quartäre Ammoniumsalze, wie z.B. Tetramethylammoniumchlorid, Alkalihydroxide, wie Natriumhydroxid und Lithiumhydroxid, Alkalicarbonate, wie Natriumcarbonat und Lithiumcarbonat, Alkalisalze organischer Säuren, wie z.B. Natriumformiat, Lithiumbenzoat und Lithiumstearat und Lewis-Säuren, wie z.B. Bortrifluorid und seine Komplexe, Titantetrachlorid, Zinnchlorid und Triethyloxoniumtetrafluoroborat.

Anschließend werden dem Epoxidharz (A) bei Temperaturen von 60 bis 200 °C, vorzugsweise von 70 bis 120 °C, das Dispergiermittel (B) und gegebenenfalls organische Lösungsmittel zugegeben und 15 bis 180, vorzugsweise 30 bis 90 Minuten, verrührt.

Danach wird bei Temperaturen von 30 bis 100 °C, bevorzugt 50 bis 90 °C, die entsprechende Menge an Wasser, vorzugsweise in mehreren Teilmengen, unter kräftigem Rühren zudosiert, wodurch die wäßrige Dispersion entsteht. Hierbei können gegebenfalls geeignete Entschäumer-/Entlüfter-Additive zugesetzt werden.

Die Dispergierung des Epoxidharzes (A) in Wasser erfolgt zweckmäßigerweise unter Zuhilfenahme geeigneter Dispergierapparate, beispielsweise eines schnellaufenden Flügelrührers, eines Mehrimpulswendelrührers, einer Kolloidmühle, eines Homogenisators, eines Dissolvers oder eines sonstigen Schnellmischers mit einer hohen Scherkraft.

Nun erfolgt unter kräftigem Rühren die Zugabe des Härtungsmittels (C), wobei ebenfalls durch längeres Verrühren, 15 bis 180, vorzugsweise 30 bis 90 Minuten, eine gute Homogenisierung erreicht wird. Zu dem so erhaltenen heißhärtenden 1K-Bindemittel können gegebenenfalls unter gutem Homogenisieren die üblichen Additive, Pigmente, Füllstoffe und/oder weitere Härterharze zugefügtwerden.

Die Härtungsmittel können als gesamte Menge oder in Teilmengen den Epoxidharzdispersionen direkt nach deren Herstellung oder auch kurz vor der Applikation zugegeben werden. Vorzugsweise erfolgt die Zugabe der Stoffe gemäß (C) direkt nach der Herstellung der Epoxidharzdispersion unter guter Homogenisierung.

Gegenüber den bekannten wäßrigen Beschichtungsmitteln für die Innenbeschichtung von Nahrungsmittelbehältern aller Art zeichnen sich die erfindungsgemäßen durch hervorragende Lagerstabilität, Aminfreiheit und Lösemittelarmut bzw. -freiheit aus. Sie sind ferner als nichtionisch stabilisierte Systeme weitestgehend unempfindlich gegen pH-Wert-Schwankungen und Wasserhärteeinflüsse, haben gegenüber ionisch stabilisierten Bindemitteln trotz niedriger Viskosität einen hohen Festkörper und weisen eine gute Pigmentierbarkeit auf.

7

Die erfindungsgemäß erhaltenen Bindemittel bzw. wäßrigen Lacke lassen sich nach den herkömmlichen Methoden (durch Tauchen, Aufwalzen, Spritzen, Streichen etc.) in dünner Schicht auf die verschiedensten, vorzugsweise metallischen Substrate auftragen und zweckmäßigerweise bei Temperaturen von 60 bis 300 °C, vorzugsweise von 80 bis 250°C, innerhalb von ein bis 150 Minuten einbrennen.

Die mit den erfindungsgemäßen Beschichtungsmitteln erhaltenen Beschichtungen sind hochgradig vernetzt, chemikalienbeständig, sterilisations- und pasteurisationsfest sowie wasserbeständig. Sie zeigen beim Einbrennen geringe oder gar keine Vergilbung, guten Verlauf und Glanz, und weisen hervorragende Haftung auf den verschiedensten Untergründen, auch bei mechanischer Belastung wie z.B. beim Tiefziehen, auf.

Die folgenden Beispiele beschreiben die Herstellung des Epoxidharzes (A), des Dispergiermittels (B), der Dispersion bzw. des heißhärtenden Bindemittels sowie dessen Anwendung.

## BEISPIELE

### I. Epoxidharze (A)

1) In einem 1-l-Vierhalskolben, ausgerüstet mit Thermometer, Flügelrührer, Rückflußkühler und Tropftrichter wurden unter einer Inertgas-Atmosphäre 144 g eines Polypropylenglykol-Diglycidylethers mit einem Epoxidäquivalentgewicht von ca. 340 g/val und 231 g Bisphenol A unter Rühren auf 130 °C erwärmt. Nach Zugabe von 300 mg Katalysator 1201 der Firma Shell Chemie (quarternäres Phosphoniumiodid) wurde weiter auf 160 °C erwärmt und bei dieser Temperatur gehalten, bis das Epoxidäquivalentgewicht des Umsetzungsproduktes mehr als 10000 g/val betrug. Anschließend wurde auf 120 °C gekühlt und bei dieser Temperatur werden 525 g eines Diglycidylethers von Bisphenol A mit einem Epoxidäquivalentgewicht von 183 g/val zugesetzt. Nach Zugabe von weiteren 300 mg des o.g. Katalysators wurde auf 160 °C erwärmt und bei dieser Temperatur gehalten, bis das Produkt ein Epoxidäquivalentgewicht von 729 g/val aufwies.

2) Es wurde genau wie unter Beispiel I.1) verfahren, jedoch wurden die Rohstoffe zusammen eingesetzt und mit 600 mg des Katalysators einstufig umgesetzt.

3) Wie in Beispiel I.2) beschrieben, wurden 26 g eines modifizierten Epoxidharzes (Diglycidylether von propoxyliertem Bisphenol A, DOW experimental resin XU 7189100) mit einem Epoxidäquivalentgewicht von 345 mit 73 g eines Polypropylenglykol-Diglycidylethers mit einem Epoxidäquivalentgewicht von ca. 340 g/val und 239 g Bisphenol A zu einem Produkt mit einem Epoxidäquivalentgewicht von 725 g/val umgesetzt.

4) Wie in Beispiel I.2) beschrieben, wurden 26 g Diglycidylether von Cyclo-hexandimethanol (Epodil 757 der Firma Anchor) mit einem Epoxidäquivalentgewicht von 160 mit 72 g eines Polypropylenglykol-Diglycidylethers mit einem Epoxidäquivalentgewicht von ca. 340 g/val, 235g eines Diglycidylethers von Bisphenol A mit einem Epoxidäquivalentgewicht von 183 g/val und 117 g Bisphenol A zu einem Produkt mit einem Epoxidäquivalentgewicht von 720 g/val umgesetzt.

5) Wie in Beispiel I.2) beschrieben, wurden 69,5 g Resorcin mit 72 g eines Polypropylenglykol-Diglycidylethers mit einem Epoxidäquivalentgewicht von ca. 340 g/val und 308,5 g eines Diglycidylethers von Bisphenol A mit einem Epoxid-äquivalentgewicht von 183 g/val zu einem Produkt mit einem Epoxidäquivalentgewicht von 703 g/val umgesetzt.

6) Wie in Beispiel I.2) beschrieben, wurden 27 g Resorcin und 56 g Bisphenol A mit 102 g eines Polypropylenglykol-Diglycidylethers mit einem Epoxidäquivalentgewicht von ca. 340 g/val und 240 g eines Diglycidylethers von Bisphenol A mit einem Epoxidäquivalentgewicht von 183 g/val zu einem Produkt mit einem Epoxidäquivalentgewicht von 772 g/val umgesetzt.

7) Wie in Beispiel I.2) beschrieben, wurden 93,5 g Bisphenol A mit 58 g eines Polypropylenglykol-Diglycidylethers mit einem Epoxidäquivalentgewicht von ca. 340 g/val und 212 g eines Diglycidylethers von Bisphenol A mit einem Epoxidäquivalentgewicht von 183 g/val zu einem Produkt mit einem Epoxidäquivalentgewicht von 733 g/val umgesetzt.

8) Ein Gemisch von 103,4 g Polypropylenglykol-Diglycidylether mit einem Epoxidäquivalentgewicht von ca. 340 g/val, 223 g Diglycidylether von Bisphenol A mit einem Epoxidäquivalentgewicht von 183 g/val, 93,5 g Bisphenol A und 30,2 g einer dimeren Fettsäure mit dem mittleren Molgewicht 567 g/mol (Pripol 1009 der Firma UNICHEMA) wird auf 150°C geheizt und nach Zugabe von 0,7g Shell-Katalysator 1201 solange auf 160°C gehalten, bis der konstante EV-Wert von 745 g/val erreicht wird.

## II. Dispergiermittel (B)

1) 309 g technisches Polyethylenglykol mit einem mittleren Molgewicht (Mw) von 4000 g/mol und 34,1 g eines Polyglycidylethers auf Basis von Bisphenol A mit einem Epoxidäquivalentgewicht von 183 g/mol wurden zusammen auf 100 °C erhitzt und unter Rühren mit 0,35 ml 50%iger wäßriger Tetrafluorborsäure versetzt. Das Äquivalentverhältnis von OH-Gruppen zu Epoxidgruppen betrug 1 : 1,20. Die Mischung wurde weiter auf 130 °C erwärmt und bei dieser Temperatur gehalten, bis das Epoxidäquivalentgewicht des Kondensationsproduktes ca. 350000 g/val betrug. Nach Erkalten wies der Emulgator eine spröde, wachsartige feste Konsistenz auf.

2) 155 g technisches Polyethylenglykol mit einem mittleren Molgewicht (Mw) von 2000 g/mol und 34,1 g eines Polyglycidylethers auf Basis von Bisphenol A mit einem Epoxidäquivalentgewicht von 183 g/mol wurden zusammen auf 100 °C erhitzt und unter Rühren mit 0,35 ml 50%iger wäßriger Tetrafluorborsäure versetzt. Das Äquivalentverhältnis von OH-Gruppen zu Epoxidgruppen betrug 1 : 1,20. Die Mischung wurde weiter auf 130 °C erwärmt und bei dieser Temperatur gehalten, bis das Epoxidäquivalentgewicht des Kondensationsproduktes ca. 350000 g/val betrug. Nach Erkalten wies der Emulgator eine wachsartige feste Konsistenz auf.

3) 250 g des gemäß Beispiel II.1) hergestellten Kondensationsproduktes wurden unter Rühren und leichtem Erwärmen auf ca. 80 °C in 250 g Wasser gelöst. Die erhaltene hellgelbe, klare Emulgatorlösung wies eine Viskosität (gemessen nach Ubbelohde, 25 °C) von 3500 mPa.s und einen Festkörper von 50 % auf.

4) 150 g des gemäß Beispiel II.1) hergestellten Kondensationsproduktes wurden mit 100 g des gemäß Beispiel II.2) hergestellten Kondensationsproduktes unter Rühren und leichtem Erwärmen auf ca. 70 °C in 250 g Wasser gelöst. Die erhaltene leicht gelbliche, klare Emulgatorlösung wies eine Viskosität (gemessen nach Ubbelohde, 25 °C) von 1800 mPa.s und einen Festkörper von 50 % auf.

## III. Härtungsmittelfreie Dispersion

Allgemeine Arbeitsvorschrift:

900 g eines Epoxidharzes gemäß der Beispiele I. werden unter Stickstoff in einem 2-l-Vierhalskolben, ausgerüstet mit Thermometer, Flügelrührer, Rückflußkühler und Tropftrichter, auf 100 bis 120 °C erwärmt bzw. nach der zuvor beendeten Kondensationsreaktion auf diese Temperatur gekühlt und mit 90 g eines Lösungsmittels gut verrührt. Danach gibt man 201 g (für 10%) bis 302 g (für 15%) Dispergiermittel nach Beispiel II zu und verrührt kräftig während etwa 1,5 Stunden, wobei die Temperatur auf 85 °C abfällt. Bei einer Rührergeschwindigkeit von 600 Upm werden in einem Zeitraum von 15 Minuten gleichmäßig 120 g deionisiertes Wasser zudosiert, die anschließend unter Senkung der Temperatur auf 70 °C während einer Stunde verrührt werden. Darauf verdünnt man die entstandene wäßrige Dispersion mit 400 bis 500 g deionisiertem Wasser.

EP 0 617 086 A2

| Nr. | Harz | Emulgator Gew.-% bez. Harz | Lösemittel Gew.-% bez. Harz | EV-Wert g/val bez. 100% | nfA % | Visk. mPas, 25°C | TG nm, mono-modal |
|---|---|---|---|---|---|---|---|
| III.1 | I.1 | 10 % II.3 | 10% Methoxybutanol | 805 | 55,1 | 1040 | 589 |
| III.2 | I.2 | 10 % II.3 | 9% Methoxybutanol | 800 | 57,4 | 2100 | 677 |
| III.3 | I.3 | 10 % II.3 | 5% Methoxypropanol | 825 | 56,1 | 1600 | 512 |
| III.4 | I.4 | 10 % II.2 | 6% Ethoxypropanol | 800 | 55,4 | 4500 | 435 |
| III.5 | I.5 | 10 % II.2 | 9% Ethoxypropanol | 865 | 55,1 | 2280 | 472 |
| III.6 | I.6 | 15 % II.3 | 10% Methoxypropanol | 913 | 58,2 | 7250 | 627 |
| III.7 | I.7 | 15 % II.3 | 10% Methoxypropanol | 878 | 59,0 | 4150 | 1417 |
| III.8 | I.8 | 15 % II.3 | 10% Methoxypropanol | 935 | 56,8 | 5100 | 873 |
| III.9 | I.7 | 15 % II.4 | 10% Methoxypropanol | 877 | 57,0 | 2400 | 765 |

nfA: nicht flüchtige Anteile (1g 1h bei 125°C im Umluftofen, DIN)

Visk: Viskosität nach Ubbelohde    TG:    Teilchengröße

## IV. Herstellung der erfindungsgemäßen Dispersion Allgemeine Arbeitsvorschrift für die Formulierung der erfindungsgemäßen Bindemittel:

Zu der Epoxidharzdispersion gibt man unter gutem Rühren langsam eine Lösung oder Dispersion von mindestens 0,5 val der Härterkomponente gemäß (C) in der benötigten Menge Wasser je val Epoxid-Gruppen. Nach gutem Homogenisieren werden 0,5 Gew.-% Phosphorsäure (als 50%ige wäßrige Lösung) eingerührt. Das so dargestellte heißhärtende 1K-Beschichtungsmittel hat in der Regel einen Festkörpergehalt von etwa 50 bis 60 %. Es ist als wäßriger Klarlack in dieser Form direkt einsetzbar und wurde so ohne weitere Zuschläge unter V. nach den Standardverfahren für Doseninnenlacke geprüft. Gegebenenfalls könnten im Anschluß noch verschiedene Zuschlagstoffe, d.h. Additive gemäß (D) zur Entschäumung, Benetzung, Verlaufsverbesserung, Pigmentierung etc. einhomogenisiert werden.

### V. Anwendungstechnische Eigenschaften

Es werden mit einer 25$\mu$m-Rakel dünne Filme auf Weißbleche und/oder Aluminiumbleche aufgezogen und diese bei 200 °C 12 Minuten lang eingebrannt. Der eingebrannte Film weist eine Trockenschichtdicke von ca. 5$\mu$m auf.

Sämtliche Klarlacke, welche aus Epoxidharzdispersionen gemäß den Beispielen III.1 bis III.9 und mit verschiedenen Härtungsmitteln (C) nach der allgemeinen Arbeitsvorschrift in IV. erhalten wurden, bilden hochvernetzte und tiefziehfähige Filme mit hohem Glanz und guter Haftung bei sehr gutem Verlauf. Die Sterilisationsbeständigkeit und Schwefelbeständigkeit sind durchwegs gut bis sehr gut. Somit sind die erfindungsgemäß beschriebenen neuen Bindemittel nicht nur für den Einsatz in Getränkedosen, sondern auch für Lebensmitteldosen uneingeschränkt geeignet.

### VI. Migrationsprüfungen

Für den Einsatz der erfindungsgemäßen Dispersionen wurden mehrere typische Vertreter unter den unter V. genannten Bedingungen auf Sn- oder Ag-Folien aufgebracht und die eingebrannten Filme mit Wasser, 3 % Essigsäure und 15 % Ethanol bei 121 °C 30 min, mit n-Heptan bei 65 °C 2 Std. lang extrahiert (2 dm$^2$ Oberfläche in Kontakt mit 400 cm$^3$ Simulanzlösemittel). Durch Verdampfen des Lösemittels und gravimetrische Bestimmung des Rückstandes wurden die Globalmigrationswerte (in mg/dm$^2$) bestimmt, welche deutlich unter den Grenzwerten von FDA (7,8 mg/dm$^2$) und BGA (5,0 mg/dm$^2$) liegen, im Mittel bei etwa 2 - 3 mg/dm$^2$. In diesem Bereich liegen auch konventionelle Konservendoseninnenlacke auf Epoxidharz bzw. Epoxy-Phenolharz-Basis. Somit erfüllen die erfindungsgemäßen Dispersionen die Anforderungen an Konservendoseninnenbeschichtungen bezüglich der Globalmigration. Wäßrige Systeme, die dem Stand der Technik entsprechen und auch zum Einsatz kommen, würden den Test unter den o.g. Bedingungen nicht bestehen, d.h. sind nicht sterilisationsfest.

### Patentansprüche

1. Wäßrige Epoxidharz-Dispersionen enthaltend

   (A) ein Epoxidharz, das ein Kondensationsprodukt aus

   (A1) 50 bis 95, vorzugsweise 55 bis 85 Gew.-% einer oder mehrerer Epoxidverbindung(en) mit mindestens zwei Epoxidgruppen pro Molekül und einem Epoxidäquivalentgewicht von 100 bis 2000 g/mol,

   (A2) 5 bis 50, vorzugsweise 15 bis 45 Gew.-% eines aromatischen Polyols und

   (A3) 0,5 bis 25 vorzugsweise 0,5 bis 10 Gew.-% modifizierender Verbindungen mit mindestens zwei epoxid-reaktiven Gruppen ist,

   (B) ein Dispergiermittel in Form eines Kondensationsproduktes aus einem aliphatischen Polyol mit einem gewichtsmittleren Molekulargewicht (Mw) von 200 bis 20000 g/mol und einer Epoxidverbindung mit mindestens zwei Epoxidgruppen pro Molekül und einem Epoxidäquivalentgewicht von 100 bis 2000 g/mol, wobei das Äquivalentverhältnis der OH Gruppen zu den Epoxidgruppen 1 : 0,8 bis 1 : 3,5 beträgt und das Epoxidäquivalentgewicht dieses Kondensationsproduktes zwischen 5 000 und 400 000 g/mol liegt,

   (C) ein Härtungsmittel für das Epoxidharz (A) und

   (D) gegebenenfalls übliche Additive, wobei die Komponenten (A), (B) und (C) in solchen Gewichtsmengen eingesetzt werden, daß das Äquivalentverhältnis der zur Umsetzung befähigten Epoxidgruppen der Komponente (A) zu den Carboxylgruppen der Komponente (B) mindestens 1 : 0,5 beträgt.

2. Wäßrige Epoxidharz-Dispersionen nach Anspruch 1, dadurch gekennzeichnet, daß das Härtungsmittel (C) für das Epoxidharz (A) ausgewählt ist aus der Gruppe der Amine, Amide, der Lewis-Säuren, der Phenole, der Carbonsäuren, der Carbonsäureanhydride, der Phenolharze und der Aminoplaste.

3. Wäßrige Epoxidharz-Dispersionen nach Anspruch 1, dadurch gekennzeichnet, daß das Härtungsmittel (C) für das Epoxidharz (A) aus einer oder mehreren Carboxylgruppen-haltigen Verbindung(en) besteht, wobei mindestens eine dieser Verbindungen eine Funktionalität von mindestens drei Carboxylgruppen pro Molekül aufweist und die Komponenten in solchen Gewichtsmengen eingesetzt werden, daß das Äquivalentverhältnis der zur Umsetzung befähigten Epoxidgruppen der Komponente (A) zu den Carboxylgruppen der Komponente (C) mindestens 1: 0,5 beträgt.

4. Wäßriges 2-Komponenten-Epoxidharz-Dispersions-System, dessen Komponente 1 eine wäßrige Dispersion ist, enthaltend

(A) ein Epoxidharz, das ein Kondensationsprodukt aus

(A1) 50 bis 95, vorzugsweise 55 bis 85 Gew.-% einer oder mehrerer Epoxidverbindung(en) mit mindestens zwei Epoxidgruppen pro Molekül und einem Epoxidäquivalentgewicht von 100 bis 2000 g/mol,

(A2) 5 bis 50, vorzugsweise 15 bis 45 Gew.-% eines aromatischen Polyols und

(A3) 0,5 bis 25, vorzugsweise 0,5 bis 10 Gew.-% modifizierender Verbindungen mit mindestens zwei epoxid-reaktiven Gruppen ist,

(B) ein Dispergiermittel in Form eines Kondensationsprodukts aus einem aliphatischen Polyol mit einem gewichtsmittleren Molekulargewicht (Mw) von 200 bis 20000 g/mol und einer Epoxidverbindung mit mindestens zwei Epoxidgruppen pro Molekül und einem Epoxidäquivalentgewicht von 100 bis 2000 g/mol

(D) gegebenenfalls übliche Additive,

und dessen Komponente 2

(C) ein Härtungsmittel für das Epoxidharz (A) ist.

5. Wäßriges 2-Komponenten-Epoxidharz-Dispersions-System nach Anspruch 4, dadurch gekennzeichnet, daß das Härtungsmittel (C) für das Epoxidharz (A) ausgewählt ist aus der Gruppe der Amine, Amide, der Lewis-Säuren, der Phenole, der Carbonsäuren, der Carbonsäureanhydride, der Phenolharze und der Aminoplaste.

6. Wäßriges 2-Komponenten-Epoxidharz-Dispersions-System nach Anspruch 4, dadurch gekennzeichnet, daß das Härtungsmittel (C) für das Epoxidharz (A) aus einer oder mehreren Carboxylgruppen-haltigen Verbindung(en) besteht, wobei mindestens eine dieser Verbindungen eine Funktionalität von mindestens drei Carboxylgruppen pro Molekül aufweist und die Komponenten in solchen Gewichtsmengen eingesetzt werden, daß das Äquivalentverhältnis der zur Umsetzung befähigten Epoxidgruppen der Komponente (A) zu den Carboxylgruppen der Komponente (C) mindestens 1: 0,5 beträgt.

7. Verwendung der wäßrigen Epoxidharz-Dispersionen nach Anspruch 1 zur Herstellung von Beschichtungen.

8. Verwendung der wäßrigen Epoxidharz-Dispersionen nach Anspruch 1 zur Herstellung von Innenbeschichtungen von Getränkedosen und Konservendosen.

9. Verwendung der wäßrigen Zweikomponenten-Epoxidharz-Dispersionssysteme nach Anspruch 4 zur Herstellung von Beschichtungen.

10. Gegenstände, die mit den Epoxidharzdispersionen gemäß Ansprüchen 1 und 4 beschichtet wurden.